# EUROPÄISCHE PATENTANMELDUNG

(11) **EP 3 048 598 A1**
(43) Veröffentlichungstag der Anmeldung: **27.07.2016**
(21) Anmeldenummer: 15151987.3
(22) Anmeldetag: 21.01.2015
(51) Int. Cl.: G09B 25/02, G05B 19/418

(54) **Industrielles System, Schulungssystem und Verfahren zum Schulen eines Anlagenfahrers**

(71) Anmelder: Siemens Aktiengesellschaft, 80333 München (DE)
(72) Erfinder: Kirchberg, Karl-Heinz, 76149 Karlsruhe (DE); Lorenz, Otmar, 76227 Karlsruhe (DE); Pfeiffer, Bernd-Markus, 76744 Wörth (DE); Rogge, Benjamin, 76199 Karlsruhe (DE); Wolf, Gerrit, 76187 Karlsruhe (DE)

(57) **Zusammenfassung**

Ein Schulungssystem (SS) zum Schulen eines Schülers (S) zum Fahren einer Industrieanlage (IA, IA') umfasst einen Prozesssimulator (PS), eine erste Steuerung (STS) zum Überwachen (121) und/oder Steuern (122) eines Simulierens (110) eines Industrieprozesses (IP), eine Trainerstation (TS) mit einer Verwaltungsfunktion (VF) für Trainingsszenarios (TSZ) und je einer Bedienoberfläche (BT, BS) für Trainer (T) und Schüler (S). Mindestens ein anderer Bestandteil (Bbb, Bssz, PS, STS) des Schulungssystems (TS) als die Bedienoberfläche (BS) für den Schüler (S) und als die Bedienoberfläche (BT) für den Trainer (T) wurde teilweise oder überwiegend mit einem selben Entwicklungswerkzeug wie die Leitwarte (LW) der Industrieanlage (IA, IA') geschaffen.

## Beschreibung

Die Erfindung betrifft ein Schulungssystem zum Schulen eines Schülers zum Fahren einer Industrieanlage. Das Schulungssystem umfasst mindestens einen Prozesssimulator zum Simulieren eines Industrieprozesses, mindestens eine erste Steuerung zum Überwachen und/oder Steuern des Simulierens des Industrieprozesses, mindestens eine Trainerstation mit einer Verwaltungsfunktion für Trainingsszenarios und einer Bedienoberfläche zum Bedienen der Trainerstation und mindestens eine Bedienoberfläche für den Schüler zum Bedienen der ersten Steuerung. Das Simulieren erfolgt mittels des Prozesssimulators. Die Industrieanlage dient der Ausführung eines Industrieprozesses. Bei dem Industrieprozess kann es sich beispielsweise um ein chemisches Verfahren, ein bearbeitendes Verfahren, ein Transportverfahren und/oder ein energieumwandelndes Verfahren handeln. Die Industrieanlage kann beispielsweise einer Erzeugung eines Produktes, einer Beförderung von Personen und/oder Gütern oder einer Erzeugung von Wärmeenergie und/oder elektrischer Energie dienen.

Eine Simulation kann eine Nachbildung eines Teils (simulierten Teils) der Industrieanlage sein. Alternativ kann eine Simulation eine Nachbildung eines Außenverhaltens (Black-Box-Verhaltens, Klemmenverhaltens) eines Teils (simulierten Teils) der Industrieanlage sein.

Im Zusammenhang mit Schulungssystemen für Anlagenfahrer wird die Simulation typischerweise dann als Emulation bezeichnet, wenn die Simulationssoftware auf einer anderen (Art von) Hardware ausgeführt wird als der, auf der die Anlagensoftware (oder Leitwartensoftware) der Industrieanlage üblicherweise betrieben wird. Bei Systemen zum Schulen von Industrieanlagenfahrern wird Ausführen von Software für speicherprogrammierte Steuerungen (SPS) auf einem handelsüblichen Personal Computer (PC) unter einem handelsüblichen Betriebssystem häufig als 'Emulation' bezeichnet.

Außerdem betrifft die Erfindung ein industrielles System, das ein Schulungssystem und eine Industrieanlage zum Ausführen eines Industrieprozesses aufweist, wobei die Industrieanlage eine zweite Steuerung zum Überwachen und/oder Steuern der Industrieanlage und eine Leitwarte aufweist.

Des Weiteren betrifft die Erfindung ein Verfahren zum Schulen eines Schülers zum Fahren einer Industrieanlage. Das Verfahren umfasst Simulieren mindestens eines Industrieprozesses, Überwachen und/oder Steuern des Simulierens des Industrieprozesses, erstes Betreiben mindestens einer Trainerstation, zweites Betreiben mindestens einer Bedienoberfläche für den Schüler zum Überwachen und/oder Steuern des Simulierens des Industrieprozesses. Die Trainerstation weist eine Verwaltungsfunktion für Trainingsszenarios und eine Bedienoberfläche zum Bedienen der Trainerstation auf.

Die EP 1 286 322 A1 beschreibt ein Simulationssystem für eine verfahrenstechnische Industrieanlage. Mit Hilfe eines Prozessmodells werden verfahrenstechnische Prozesse und deren anlagentechnische Realisierung nachgebildet (beispielsweise mit Kesseln, Erhitzern, Rohrleitungen, Ventilen, Pumpen und anderen verfahrenstechnischen Komponenten). Ein Simulationsrechner enthält ein Automatisierungstechnik-Prozessmodell einer zur Überwachung, Steuerung und/oder Regelung der technischen Industrieanlage verwendeten automatisierungstechnischen Einrichtung. Das Automatisierungstechnik-Prozessmodell bildet das Verhalten von Automatisierungsgeräten, insbesondere deren Stelleingriffe auf Anlagenkomponenten, nach. Der Simulationsrechner umfasst ein Bedienungs- und Beobachtungsprogramm, welches praktisch unverändert auch in einem Bedien- und Beobachtungssystem der technischen Industrieanlage eingesetzt ist. Das Verfahrenstechnik-Prozessmodell und/oder andere Komponenten des Simulationssystems können verändert werden, um spezielle Betriebssituationen zu trainieren, insbesondere kritische Situationen, welche an der realen technischen Industrieanlage nicht ohne Gefährdung von Mensch und/oder Material herbeiführbar wären.

Ausgehend von diesem Stand der Technik ist es eine Aufgabe der vorliegenden Erfindung, Entwicklungskosten für ein Schulungssystem zum Schulen eines Schülers zum Fahren einer Industrieanlage zu verringern und/oder eine Qualität so eines Schulungssystems zu verbessern.

Diese Aufgabe wird erfindungsgemäß durch ein Schulungssystem zum Schulen eines Schülers zum Fahren einer Industrieanlage gelöst, wobei das Schulungssystem Folgendes umfasst: mindestens einen Prozesssimulator zum Simulieren eines Industrieprozesses, mindestens eine erste Steuerung zum Überwachen und/oder Steuern des Simulierens des Industrieprozesses, das mittels des Prozesssimulators erfolgt, mindestens eine Trainerstation mit einer Verwaltungsfunktion für Trainingsszenarios und einer Bedienoberfläche zum Bedienen der Trainerstation, mindestens eine Bedienoberfläche für den Schüler zum Bedienen der ersten Steuerung. Mindestens ein anderer Bestandteil des Schulungssystems als die Bedienoberfläche für den Schüler und als die Bedienoberfläche für den Trainer wurde teilweise oder überwiegend mit einem selben Entwicklungswerkzeug wie die Leitwarte einer Industrieanlage geschaffen.

Entsprechend weist ein industrielles System ein erfindungsgemäßes Schulungssystem und eine Industrieanlage zum Ausführen eines Industrieprozesses auf, wobei die Industrieanlage eine zweite Steuerung zum Überwachen und/oder Steuern der Industrieanlage und eine Leitwarte aufweist.

Das erfindungsgemäße Verfahren zum Schulen eines Schülers zum Fahren einer Industrieanlage umfasst Folgendes: Simulieren mindestens eines Industrieprozesses, Überwachen und/oder Steuern des Simulierens des Industrieprozesses, erstes Betreiben mindestens einer Trainerstation, zweites Betreiben mindestens einer Bedienoberfläche für den Schüler zum Überwachen und/oder Steuern des Simulierens des Industrieprozesses. Die Trainerstation weist eine Verwaltungsfunktion für Trainingsszenarios und eine Bedienoberfläche zum Bedienen der Trainerstation auf. Mindestens ein anderer Bestandteil des Schulungssystems als die Bedienoberfläche für den Schüler und als die Bedienoberfläche für den Trainer wurde teilweise oder überwiegend mit einem selben Entwicklungswerkzeug wie die Leitwarte einer Industrieanlage geschaffen. Die Verfahrensschritte sind zeitlich überlappend ausführbar.

Ausgehend von dem bekannten Schulungssystem zum Schulen eines Schülers zum Fahren einer Industrieanlage kann ein Konzept der Erfindung darin gesehen werden, dass Entwicklungskosten für das Schulungssystem dadurch eingespart werden, dass mindestens ein anderer Bestandteil des Schulungssystems als die Bedienoberfläche für den Schüler und als die Bedienoberfläche für den Trainer teilweise oder überwiegend mit einem selben Entwicklungswerkzeug wie die Leitwarte einer Industrieanlage geschaffen wurde. So kann ein Schulungssystem mit geringerem Aufwand und verringertem Fehlerrisiko bereitgestellt werden. Beispielsweise können auf diese Weise Unterschiede zwischen der Leitwarte und dem Schulungssystem in Semantik, Logik, Design oder Bedienkonzept vermieden werden und eine Realitätsnähe und somit Qualität der Schulung verbessert werden. Für die Entwicklung des Schulungssystem können beispielsweise eine selbe Objektdatenbank, ein selbes UML-Werkzeug (UML = Unified Modeling Language), ein selbes Projektmanagement-Tool und/oder ein selber Compiler eingesetzt werden.

Eine erste Ausführungsform sieht vor, dass die erste Steuerung teilweise oder überwiegend mit selben Mitteln verwirklicht ist wie eine zweite Steuerung zum Überwachen und/oder Steuern der Industrieanlage. Hierdurch kann eine Verringerung von Herstellkosten für das Schulungssystem erreicht werden. Aufgrund der Baugleichheit der ersten und zweiten Steuerung werden sonst mögliche Unterschiede zwischen einem Außenverhalten der ersten und der zweiten Steuerung von vornherein vermieden sowie Praxisnähe und Qualität der Schulung verbessert.

Davon unabhängig sieht eine zweite Ausführungsform vor, dass die Trainerstation teilweise oder überwiegend mit selben Mitteln verwirklicht ist wie eine Leitwarte der Industrieanlage. Auch hierdurch kann eine Verringerung von Herstellkosten für das Schulungssystem erreicht werden. Unterschiede zwischen einem Außenverhalten der Trainerstation und der Leitwarte werden von vornherein vermieden. Durch Vermeidung von solchen Unterschieden wird für den Trainer eine Realitätsnähe verbessert und seine Schulungstätigkeit erleichtert.

Eine davon unabhängige dritte Ausführungsform sieht vor, dass die Bedienoberfläche für den Schüler teilweise oder überwiegend mit selben Mitteln wie eine Leitwarte einer Industrieanlage verwirklicht ist. Auch hierdurch können eine Verringerung von Herstellkosten für das Schulungssystem erreicht werden und Unterschiede zwischen einem Außenverhalten der Bedienoberfläche für den Schüler und der Leitwarte von vornherein vermieden werden. Durch Vermeidung von solchen Unterschieden wird eine Realitätsnähe und somit Qualität der Schulung verbessert.

Vorteilhaft ist, wenn das Schulungssystem dazu vorbereitet ist, teilweise oder überwiegend auf einer teilweise oder überwiegend baugleichen oder sogar identischen Laufzeitumgebung ausgeführt zu werden wie die Leitwarte der Industrieanlage. Auch hierdurch können eine Verringerung von Herstellkosten für das Schulungssystem erreicht werden und Unterschiede zwischen einem Außenverhalten der Bedienoberfläche für den Schüler und der Leitwarte von vornherein vermieden werden. Durch Vermeidung von solchen Unterschieden wird eine Realitätsnähe und somit Qualität der Schulung verbessert.

Eine zweckmäßige Weiterbildung sieht vor, dass das Schulungssystem dazu vorbereitet ist, in Zeitteilung mit der Leitwarte auf einer Laufzeitumgebung ausgeführt zu werden, auf der Funktionen der Leitwarte der Industrieanlage ausführbar sind. Auch hierdurch können eine Verringerung von Herstellkosten für das Schulungssystem erreicht werden und Unterschiede zwischen einem Außenverhalten des Schulungssystems und der von ihm simulierten Industrieanlage von vornherein vermieden werden. Durch Vermeidung von solchen Unterschieden wird eine Realitätsnähe und somit Qualität der Schulung verbessert. Die Zeitteilung kann semipermanent oder permanent starr sein.

Es gibt Anwendungsfälle, in denen es zweckmäßig ist, wenn das Schulungssystem dazu vorbereitet ist, auf einer anderen Hardware als die Leitwarte der Industrieanlage, aber einer ansonsten baugleichen Laufzeitumgebung wie die Funktionen der Leitwarte ausgeführt zu werden. Hierdurch können Entwicklungskosten und aufgrund von Rationalisierungsvorteilen auch Softwareinstallationskosten eingespart werden sowie Unterschiede zwischen einem Außenverhalten des Schulungssystems und der Leitwarte der Industrieanlage vornherein vermieden werden. Durch Vermeidung von solchen Unterschieden wird eine Realitätsnähe und somit Qualität der Schulung verbessert.

Besondere Vorteile ergeben sich, wenn das Schulungssystem dazu vorbereitet ist, mindestens ein Feldgerät der Industrieanlage zu simulieren. Auch hierdurch wird eine Realitätsnähe und somit Qualität der Schulung verbessert.

Besonders vorteilhaft ist, wenn das Schulungssystem eine Bibliothek mit Störszenarien aufweist und die Trainerstation dazu vorbereitet ist, zum Schulen des Schülers wahlweise eines oder mehrere der Störszenarien zu aktivieren. Auch hierdurch kann eine Realitätsnähe der Schulung verbessert werden. Hierdurch können standardisierte Schulungsabläufe durchgeführt werden und somit eine Verlässlichkeit und Qualität der Schulung verbessert werden.

Eine davon unabhängige weitere Weiterbildung sieht vor, dass das Schulungssystem eine Bibliothek mit mindestens einem Bedienbild aufweist, das anzeigt, welche manuellen Bedienelemente zum Bedienen einer Anlagenkomponente der Industrieanlage vorgesehen sind. Auch dies ist ein Beitrag dafür, dass Unterschiede zwischen einem Außenverhalten des Schulungssystems und der von ihm simulierten Industrieanlage von vornherein vermieden werden. Durch Vermeidung von solchen Unterschieden wird eine Realitätsnähe und somit Qualität der Schulung verbessert.

Die Erfindung ist anhand der beigefügten Zeichnungen näher erläutert, in denen zeigen:
- FIG 1: schematisch ein industrielles System mit einer Industrieanlage und einem Schulungssystem zum Schulen eines Schülers zum Fahren der Industrieanlage,
- FIG 2: schematisch ein Verfahren zum Schulen eines Schülers zum Fahren der Industrieanlage,
- FIG 3: schematisch eine Entwicklersicht eines Projekts eines Schulungssystems,
- FIG 4: schematisch eine Standard-Benutzersicht für einen Anlagenfahrer in einer Leitwarte,
- FIG 5: schematisch eine Benutzersicht mit einem erweiterten Bedienbild für einen Trainer,
- FIG 6: schematisch eine Benutzersicht des Schulungssystems mit einem Bedienbild für eine Vor-Ort-Bedienung.

Die nachfolgend näher geschilderten Ausführungsbeispiele stellen bevorzugte Ausführungsformen der vorliegenden Erfindung dar.

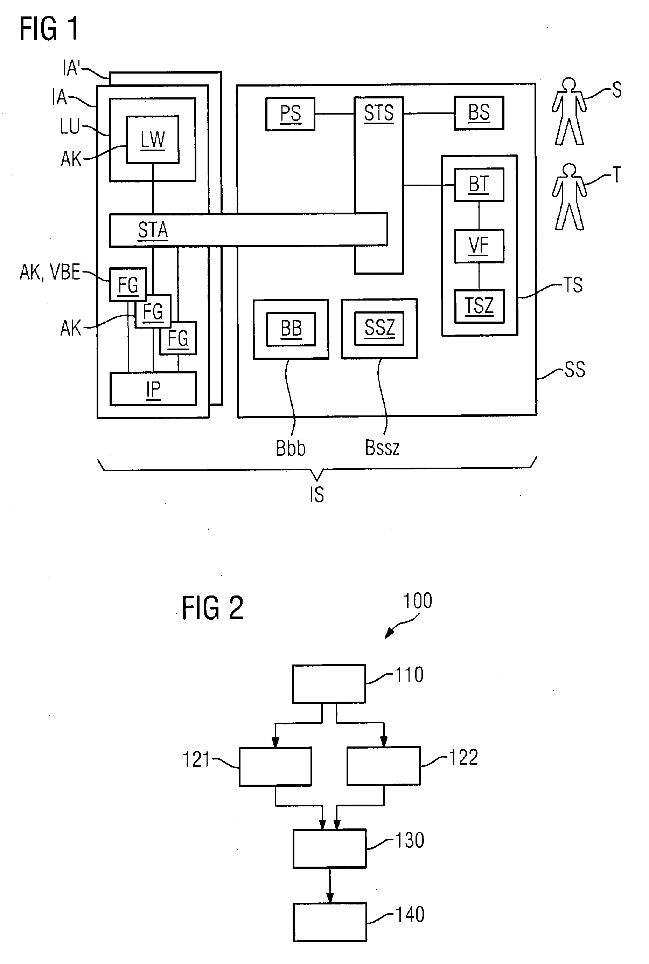

Das in FIG 1 gezeigte industrielle System IS umfasst eine Industrieanlage IA, IA' und ein Schulungssystem SS zum Schulen eines Schülers S zum Fahren der Industrieanlage IA, IA'. Die Industrieanlage IA, IA' ist zur Ausführung eines Industrieprozesses IP vorgesehen (Beispiele für den Industrieprozess IP sind in der Einleitung erwähnt). Der Industrieprozess IP ist mittels Feldgeräten FG überwachbar und beeinflussbar. In der Industrieanlage IA, IA' wird ein Teil der Feldgeräte FG mittels einer (zweiten) Steuerung STA überwacht und gesteuert. In der Industrieanlage IA, IA' sind typischerweise auch Feldgeräte FG vorgesehen, deren Ablesung und/oder Bedienung auch vor Ort oder nur vor Ort möglich ist. Solche Feldgeräte FG (die beispielsweise manuell betätigbare Ventile, Schieber, Pumpen, Erhitzer, Schalter, Taster, Hebel oder Zustandsanzeigen sind) werden im Folgenden als Vor-Ort-Bedienelemente VBE bezeichnet. Die Figur zeigt ganz links ein Feldgerät FG ohne Überwachung oder Steuerung durch die (zweite) Steuerung STA. Die Industrieanlage IA, IA' umfasst eine Laufzeitumgebung LU, auf der Funktionen (Software) einer lauffähigen Leitwarte LW installiert sind.

Das Schulungssystem SS umfasst einen Prozesssimulator PS zum Simulieren eines Industrieprozesses IP der Industrieanlage IA, IA'. Der Prozesssimulator PS wird für dynamische Anlagensimulationen benötigt. Die Hauptaufgabe des Prozesssimulators PS ist die simulative Darstellung des Industrieprozesses IP. Es sind unterschiedliche Varianten für verteilte Steuerungssysteme bekannt. Anbieter von Automatisierungssystemen bieten typischerweise signalorientierte Einfachmodelle an. Anbieter von Simulationssoftware bieten typischerweise Modelle mit hoher Realitätstreue an.

Anforderungen an Modelle mit hoher Realitätstreue sind unter anderem:
- Das verwendete thermodynamische System muss zur Industrieanlage IA, IA' passen.
- Stoffdatenbanken mit Wechselwirkungsparametern müssen vorhanden sein. Zusätzliche Stoffdaten sollten darin schnell und ohne viel Aufwand integriert werden können.
- Das Programm sollte eine ausreichende Bibliothek zum Simulieren von speziellen Anlagenteilen (z. B. Wärmetauscher) zur Verfügung stellen.
- Das Programm sollte über Schnittstellen zu anderen Simulationsprogrammen verfügen.
- Anforderungen an Simulationsnumerik:
   - Verteilbarkeit der Prozesssimulation auf mehrere Rechner, um bei hohem Rechenaufwand Echtzeitfähigkeit zu erhalten,
   - Einstellbarkeit der Simulationsgeschwindigkeit (Zeitraffer, z.B. bis zu 500x schneller als Echtzeit),
   - hohe Simulationsgenauigkeit auch außerhalb des optimalen Betriebsbereiches (z.B. mit Abweichungen < 5%).

Das Schulungssystem SS weist eine (erste) Steuerung STS zum Überwachen und/oder Steuern des Prozesssimulators PS auf. In einer ersten Variante wird die Original-Hardware (Steuerung) entsprechend der Leitwarte LW verwirklicht und an die Prozesssimulation (beispielsweise Simatic^{®} PCS 7 und Simba-Box^{®}) gekoppelt. In einer zweiten Variante werden die Steuerungen STA der Industrieanlage IA, IA' simuliert. In der Regel wird eine Simulation der Steuerungen STA bevorzugt, weil in der Regel unterstellt wird, dass dies kostengünstiger ist und zusätzliche Funktionen ermöglicht (beispielsweise eine Erstellung von Snapshots).

Die Steuerung STS wird durch eine Trainerstation TS überwacht und gesteuert. BS ist die Bedienstation für den zu schulenden Schüler S. In einer ersten Variante werden die originalen Automatisierungsfunktionen und Bedienbilder BB der Leitwarte LW (Bedienstation) verwendet. In einer zweiten Variante werden auch die Automatisierungsfunktionen innerhalb der Prozesssimulatorsoftware simuliert und Bedienbilder BB der Leitwarte LW näherungsweise mit Darstellungsmitteln des Prozesssimulators PS nachgebaut. Heutzutage wird die Prozesssimulatorsoftware von Prozesstrainern komplett neu implementiert, wenn der Schwerpunkt der Anwendung auf einer Schulung des Prozessverhaltens liegt. Bevorzugt wird eine Nutzung der originalen Automatisierungssoftware einschließlich Bedienoberflächen BS, um Anlagenfahrern ein möglichst realitätsnahes Abbild der realen Leitwarte LW anzubieten. Außerdem wird die Steuerung STS von einer Bedienoberfläche BS für Schüler S überwacht und gesteuert. Die Trainerstation TS umfasst eine Bedienoberfläche BT für den Trainer T. Außerdem umfasst die Trainerstation TS eine Verwaltungsfunktion VF zur Auswahl von vorgefertigten Trainingsszenarien TSZ. Darüber hinaus umfasst das Schulungssystem SS eine Bibliothek Bbb mit Bedienbildern BB und eine Bibliothek Bssz mit Störungsszenarien SSZ.

Mindestens ein anderer Bestandteil Bbb, Bssz, PS, STS des Schulungssystems TS als die Bedienoberfläche BS für den Schüler S und als die Bedienoberfläche BT für den Trainer T wird teilweise oder überwiegend mit einem selben (in den Figuren nicht dargestellten) Entwicklungswerkzeug wie die Leitwarte LW einer Industrieanlage IA, IA' geschaffen.

Eine Trainerstation TS kann folgende Funktionen aufweisen:
- Steuern des Prozesssimulators PS (unter anderem: Start, Stop, Erstellen/Laden von Trainingsszenarios TSZ und Snaphots, Zeitraffer);
- Überwachen des Schulungssystems SS (der Trainer T soll die gleichen Anlagenbilder sehen wie der Schüler S);
- Auswahlmöglichkeit für den Trainer T von Störungen und Möglichkeit der Definition von Trainingsszenarien TSZ;
- Bewertungsmöglichkeit von Handlungen des Schülers S und Dokumentation des Sitzungsverlaufes.

Ein Schulungssystem SS wird in der Regel mehrere Trainingsszenarien TSZ bereitstellen, zu denen sowohl normale Betriebszustände als auch Ausnahmesituationen gehören. Normale Betriebszustände können beispielsweise sein:
- Anfahren einer Industrieanlage IA, IA' aus einem Stillstand oder Leerlauf (beispielsweise mit unterschiedlichen Qualitäten der Eingangsrohstoffe);
- Produktionsbetrieb mit voller Auslastung, stabiler Betrieb oder Teillastbetrieb;
- Herunterfahren der Industrieanlage IA, IA'.

Beispiele für Ausnahmesituationen (Störungen & Notfallsituationen) :
- Verschmutzen von Filtern, Rohren und Pumpen;
- Hängenbleiben von Ventilen;
- Ausfall von Sensorik;
- Fehlbedienungen von Handventilen.

Zum Schulen des Schülers S für solche Ausnahmesituationen lädt der Trainer T ein Trainingsszenario TSZ der Industrieanlage IA, IA' (gespeicherter Snapshot) und gibt eine Aufgabenstellung vor. Bei Ausnahmesituationen erhält der Schüler S einen Alarm auf seinem Bedienbild BB. Nun muss er, wie in der entsprechenden realen Industrieanlage IA, IA', die Ursache des Alarms herausfinden und Gegenmaßnahmen ergreifen.

Für die Trainerstation TS gibt es unterschiedliche Realisierungsvarianten:
- Eine Erweiterung der realen Prozessautomatisierung um Funktionen der Trainerstation TS (dies wird in der Regel nicht akzeptiert, weil dadurch die originale Automatisierungssoftware verändert wird);
- Realisierung als eine eigenständige Applikation, die auf einem separaten Rechner abläuft und beispielsweise über OPC (OLE for Process Control; OLE = Object Linking and Embedding) an eine Automatisierung und einen Prozesssimulator PS angebunden wird (die Erstellung und Wartung der Applikation ohne eine komfortable Entwicklungsumgebung ist sehr aufwändig; sie führt zu starken Abweichungen bei den Bedienoberflächen für Schüler S und Trainer T und einem hohen Aufwand für Schnittstellen);
- Realisierung als Teil des Prozesssimulators PS, also mit Hilfe der Softwareumgebung des Prozesssimulators PS (dies hat den Nachteil, dass für den Trainer T eine eigenständige Bedienoberfläche BT erstellt werden muss und eine Simulationssoftware typischerweise keine ideale Entwicklungsumgebung für derartige Funktionen darstellt; wenn die Trainerstation TS innerhalb einer Prozesssimulatorsoftware implementiert wird, hat sie nicht auf alle Funktionen der Leitwarte LW Zugriff; wenn die Trainerstation TS keinen Zugriff auf das Meldesystem hat, können die Meldeprotokolle nicht zur Bewertung der Leistung des Schülers S verwendet werden).

Eine erste Ausführungsform des Schulungssystems SS sieht vor, dass die erste Steuerung STS teilweise oder überwiegend mit selben Mitteln verwirklicht ist wie eine zweite Steuerung STA zum Überwachen und/oder Steuern der Industrieanlage IA, IA'. Dies wird in der Figur durch Überlappen der Blöcke für die erste STA und zweite STS Steuerung symbolisiert.

Eine zweite Ausführungsform des Schulungssystems SS sieht vor, dass die Trainerstation TS teilweise oder überwiegend mit selben Mitteln verwirklicht ist wie eine Leitwarte LW der Industrieanlage IA, IA'.

Eine dritte Ausführungsform des Schulungssystems SS sieht vor, dass die Bedienoberfläche BS für den Schüler S teilweise oder überwiegend mit selben Mitteln verwirklicht ist wie eine Leitwarte LW einer Industrieanlage IA, IA'.

Das in FIG 2 gezeigte Verfahren 100 zum Schulen eines Schülers S zum Fahren einer Industrieanlage IA, IA' umfasst folgende Schritte. In einem ersten Schritt 110 (Simulieren) wird mindestens ein Industrieprozess IP simuliert. In einem zweiten Schritt 121, 122 (Überwachen und/oder Steuern) wird das Simulieren 110 des Industrieprozess IP überwacht und/oder gesteuert. In einem dritten Schritt erfolgt ein erstes Betreiben 130 mindestens einer Trainerstation TS, die eine Verwaltungsfunktion VF für Trainingsszenarios TSZ und eine Bedienoberfläche BT zum Bedienen der Trainerstation TS aufweist. In einem vierten Schritt erfolgt ein zweites Betreiben 140 mindestens einer Bedienoberfläche BS für den Schüler S zum Überwachen 121 und/oder Steuern 122 des Simulierens 110 des Industrieprozesses IP. Mindestens ein anderer Bestandteil Bbb, Bssz, PS, STS des Schulungssystems SS als die Bedienoberfläche BS für den Schüler S und als die Bedienoberfläche BT für den Trainer T wurde teilweise oder überwiegend mit einem selben Entwicklungswerkzeug wie die Leitwarte LW einer Industrieanlage IA, IA' geschaffen.

Die Anforderungen an den Betrieb von Industrieanlagen IA, IA' werden immer höher, beispielsweise durch stärkere Integration unterschiedlicher Anlagenteile, höhere Komplexität von Komponenten, weniger Bedienpersonal, stark schwankende Qualität der Eingangsrohstoffe. Zur Erfüllung dieser Anforderungen sollen Industrieanlagen IA, IA' stets am optimalen Betriebspunkt gefahren werden. Weiterhin soll dieser Betriebspunkt beim Anfahren oder nach Lastwechseln möglichst schnell erreicht werden. Dieser optimale Betriebspunkt stellt aber nur einen kleinen Teil des möglichen Betriebsbereiches einer Industrieanlage IA, IA' dar. Um eine Industrieanlage IA, IA' in diesem Bereich zu halten, ist daher ein hoher Automatisierungsgrad erforderlich.

Bei Verlassen des zulässigen Betriebsbereiches kann die Automatisierung noch in einem gewissen Umfang reagieren. Bei zu starken oder nicht vorhersehbaren Abweichungen müssen aber die Anlagenfahrer manuell eingreifen, bevor Schutzmaßnahmen wirksam werden und die Industrieanlage IA, IA' komplett abschaltet.

Ein Problem besteht darin, dass Anlagenfahrer nicht unbedingt immer in der Lage sind, auf schwierige, aber selten auftretende Situationen angemessen zu reagieren. Bedienfehler und unzureichende Abstimmung zwischen Bedienpersonal in der Leitwarte und im Feld zählen daher zu den häufigsten Gründen für Anlagenabschaltungen.

Durch Schulung von Anlagenfahrern mit Hilfe eines Schulungssystems SS können die Fähigkeiten von Anlagenfahrern verbessert und kritische Situation in einer Simulationsumgebung geübt werden, ohne den realen Industrieprozess IP zu beeinflussen oder zu gefährden. Betreiberschulungssysteme sind seit vielen Jahren auf dem Markt erhältlich. Obwohl der Einsatz von Betreiberschulungssystemen viele Vorteile bietet, die über eine reine Schulung von Anlagenfahrern hinausgehen, gibt es aufgrund der hohen Kosten noch keine weite Verbreitung von solchen Schulungssystemen SS in der Prozessindustrie. Die hohen Kosten sind nicht nur auf den Aufwand für Modellbildung, Installation und Wartung zurückzuführen, sondern auch auf den Aufwand zum Implementieren spezieller Funktionen der Trainerstation TS und der Nachbildungen von Vor-Ort-Bedienelementen VBE der Industrieanlage IA, IA'.

Als eine bevorzugte Ausführungsform der vorliegenden Erfindung wird vorgeschlagen, die spezielle Software für eine Trainerstation TS mit den üblichen reichhaltigen Darstellungsmitteln einer Leitwarte LW zu erstellen, aber als getrenntes, zusätzliches Programm, das in einem Multiprojekt zusammen mit der Prozessautomatisierung integriert wird und auf einer getrennten simulierten Steuerung abläuft.

Ein weiteres Merkmal der Erfindung betrifft eine Realisierung von Ausnahmesituationen, die mit Fehlern von Feldgeräten FG zu tun haben. Dazu werden in der Prozesssimulation nicht nur ein Industrieprozess IP, sondern auch Feldgeräte FG simuliert. Für die Feldgeräte FG (Sensoren, Aktoren, Schalter) werden Gerätemodelle erstellt, die aus der Trainerstation TS zusätzliche Eingänge für Signale erhalten, und eine Betriebsartenlogik mit folgenden Zuständen:
- Normalbetrieb (Werte aus der Prozesssimulation werden vom Gerätemodell ausgegeben),
- Schulungsbetrieb (Werte aus der Trainerstation werden vom Gerätemodell ausgegeben).

Eine bevorzugte Weiterbildung des Schulungssystems SS sieht eine Definition von Trainingsszenarien TSZ für häufig vorkommende Apparatemodelle (beispielsweise Rührkesselreaktoren, Destillationskolonnen) vor. In diese Trainingsszenarien TSZ könnten im Rahmen der Erstellung einer Bibliothek Bssz für den Prozesssimulator PS vordefinierte Störungsszenarien SSZ implementiert werden (beispielsweise Fluten einer Kolonne, Fouling eines Wärmetauschers). Die Störungsszenarien SSZ können beispielsweise mittels eines SFC (Sequential Function Chart) realisiert werden und brauchen bei Bedarf von der Trainerstation TS aus nur noch mit einem einzigen Binärsignal aktiviert werden.

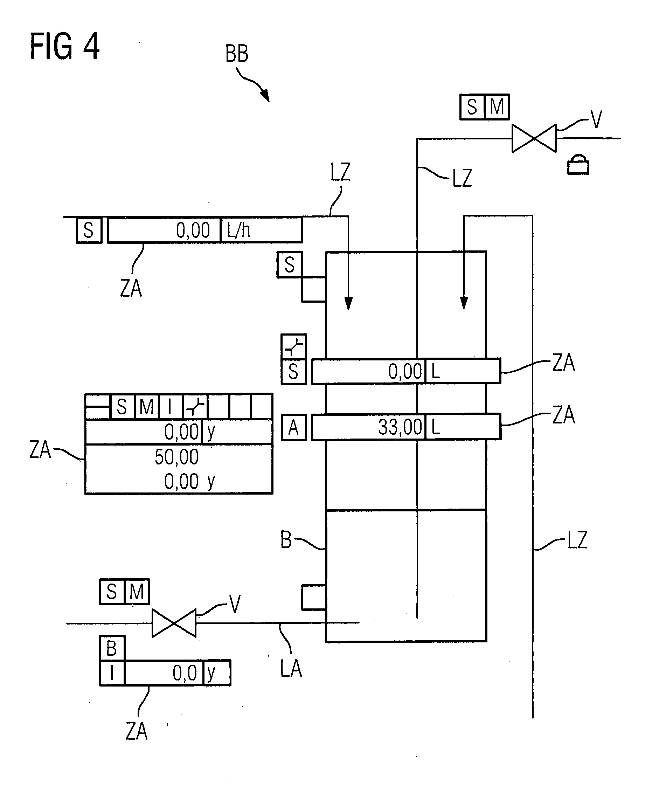

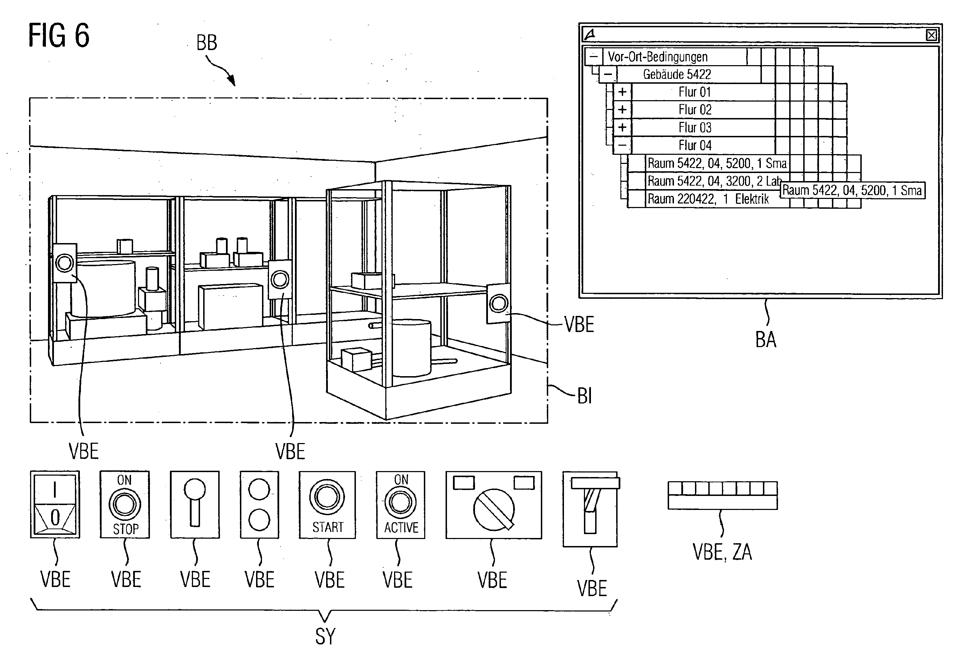

Im Zuge einer Instandsetzung oder eines Austauschs von Anlagenkomponenten AK (beispielsweise von Pumpen) müssen Handventile V (siehe FIG 4) in den Rohrleitungen LA, LZ für Zu- und Abläufe geschlossen werden. Im Zuge der nachfolgenden Inbetriebnahme müssen diese Handventile V wieder geöffnet werden. Wenn dabei eines dieser Ventile V übersehen wird, kann dies schwerwiegende Auswirkungen haben. Zur Schulung kann daher in Vor-Ort-Bedienbildern BB (siehe FIG 6) angezeigt werden, welche Handventile V zu einer Anlagenkomponente AK gehören (beispielsweise durch Farbgebung oder Farbumschlag). Der Schüler S muss dann alle Ventile V bedienen, die eine Checkliste vorgibt.

Die Realisierung der Trainerstation TS mit Standardmitteln einer Leitwarte LW, aber in einem separaten Programm, erlaubt eine aufwandsarme Erstellung eines Schulungssystems SS.

Sie hat im Einzelnen folgende Vorteile:
- Die vorhandenen Automatisierungsfunktionen in der Original-Leitwarte LW werden nicht verändert.
- Die vorhandenen Automatisierungsfunktionen und Bedienoberflächen können in der Trainerstation TS genutzt werden.
- Die Ablaufumgebung für Trainingsfunktionen ist eine zusätzliche simulierte Steuerung und kein separater PC.
- Der Trainer T hat auf seiner Station die gleichen Bedienbilder BB wie der Schüler S (jedoch erweitert um zusätzlichen Trainingsfunktionen).
- Für die Erstellung der Trainingsfunktionen können die komfortablen Möglichkeiten des Engineering-Systems der Leitwarte LW genutzt werden (beispielsweise ein SFC = Sequential Function Chart zur Definition eines zeitlichen Ablaufs von Szenarien SSZ, TSZ oder Ausnahmesituationen).
- Die Trainerstation TS hat vollen Zugriff auf alle Funktionen der Leitwarte LW einschließlich Meldungsarchiv (sowohl für eine Implementierung von Trainingsszenarien TSZ, als auch für eine Auswertung von Handlungen des Schülers S).
- In Snapshots werden aktuelle Zustände einer Prozesssimulation und Steuerung eines Trainingsszenarios TSZ gespeichert (das Speichern/Laden eines Snapshots kann von der Trainerstation TS gesteuert werden; vor dem Speichern kann der Prozesssimulator PS und die Automatisierung über die Trainerstation TS in einen stationären Zustand gefahren werden, so dass im Snapshot keine internen Übergangsvorgänge gespeichert werden).

Die Erweiterung der Gerätemodelle im Prozesssimulator PS um Eingänge und Betriebsarten für die Trainerstation TS hat den Vorteil, dass Gerätefehler zur Verwendung in Trainingsszenarien TSZ aufwandsarm von der Trainerstation TS aus simuliert werden können. Die Gerätemodelle bilden eine Schnittstelle zwischen Prozesssimulator PS und Automatisierung. In der Betriebsart Schulung werden die Signale von der Trainerstation TS direkt auf Ausgänge des Gerätemodells durchgeschaltet (beispielsweise Ventilstellungen, Ersatzwerte für Messsignale, Schaltereinstellungen). Die Schnittstellenproblematik vereinfacht sich damit, weil jetzt die Anbindung der Trainerstation TS an den Prozesssimulator PS über den gleichen Weg erfolgt wie die Anbindung der Automatisierung.

Die Simulation beziehungsweise Simulation von Vor-Ort-Bedienelementen VBE im Rahmen des Schulungssystems SS mit Darstellungsmitteln der Leitwarte LW hat den Vorteil, dass auch Trainingsszenarien TSZ trainiert werden können, die eine Betätigung von Vor-Ort-Bedienelementen VBE beinhalten, ohne dass Menschen die reale Industrieanlage IA, IA' begehen oder dass aufwändige 3D-Simulationen anhand von CAD-Daten erforderlich sind. Dies hat weiterhin den Vorteil, dass Betätigungen von Vor-Ort-Bedienelementen VBE auch mit Standardmitteln der Leitwarte LW protokolliert werden können. Störungen in Anlagenkomponenten AK können mittels animierter Bilder BI (siehe FIG 6) dargestellt werden.

Die Integration von Störszenarien SSZ in Apparatemodellen des Prozesssimulators PS verringert einen Aufwand für die projektspezifische Implementierung von Trainingsszenarien TSZ für das Schulungssystem SS zum Umgang mit solchen Störungen. Denn derjenige, der ein verfahrenstechnisches Prozessmodell implementiert, weiß typischerweise auch, welche Störungen an Anlagenkomponenten AK auftreten können und wie diese am besten dargestellt werden können. Im Gegensatz dazu ist es für denjenigen, der eine Trainerstation TS projektiert, sehr viel schwieriger, eine angemessene Möglichkeit zu finden, ein im Trainingsszenario TSZ gewünschtes Fehlverhalten mittels einer äußeren Parametrierung eines fehlerfreien Apparatemodells zu erzielen.

Die nachfolgenden Abbildungen zeigen, wie in einem Engineeringsystem neben einem echten Automatisierungsprojekt ein weiteres Projekt für ein Schulungssystem SS erstellt und in ein vorhandenes Multiprojekt eingefügt werden kann.

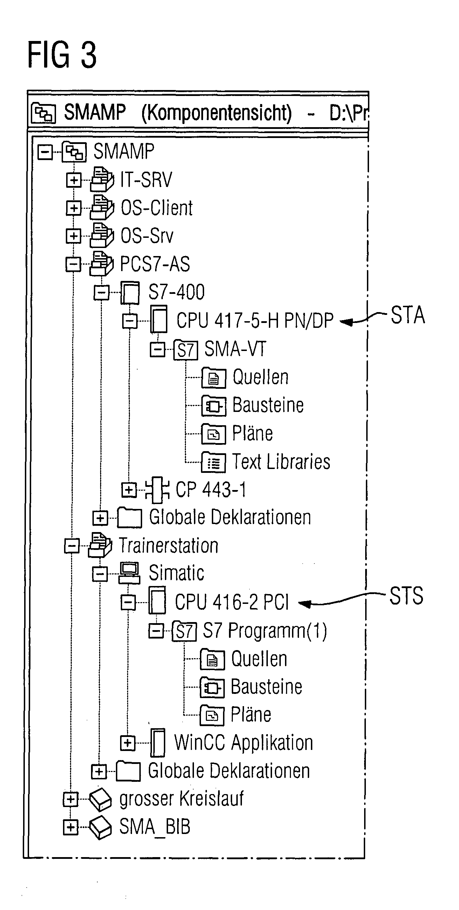

Die FIG 3 zeigt eine Benutzersicht eines Projekts eines Schulungssystems SS mit integrierter Trainerstation TS und zwei simulierten Steuerungen STA, STS. Die in der Figur oben dargestellte Steuerung STA dient einer realen Automatisierung der Industrieanlage IA, IA', die untere Steuerung STS ist Teil des Schulungssystem SS. Hierfür kann beispielsweise die Simulationssoftware SIMIT^{®} verwendet werden.

Die FIG 4 zeigt einen Ausschnitt aus einer Standard-Benutzersicht für einen Anlagenfahrer in einer Leitwarte LW. In dem Ausschnitt ist schematisch ein Behälter (Reaktor) B dargestellt, der mit Zuleitungen LZ und einer Abflussleitung LA verbunden ist. Eine der Zuleitungen LZ und die Abflussleitung LA weisen je ein Ventil V auf. An den Symbolen für den Behälter B und die Leitungen LA, LZ sind diverse Zählerstandsanzeigen ZA für Durchflussmengen und/oder Füllmengen angeordnet. Aus den Zählerständen der Zählerstandsanzeigen ZA kann ein Anlagenfahrer auf einen Betriebszustand dieses und/oder eines anderen Teils der Industrieanlage IA, IA' schließen. Während einer Schulung wird dem Schüler S dieselbe Darstellung angezeigt wie die, die dem Anlagenfahrer in der Leitwarte LW während eines Wirkbetriebs (Produktionsbetriebs) der von ihm zu fahrenden Industrieanlage IA, IA' dargeboten wird.

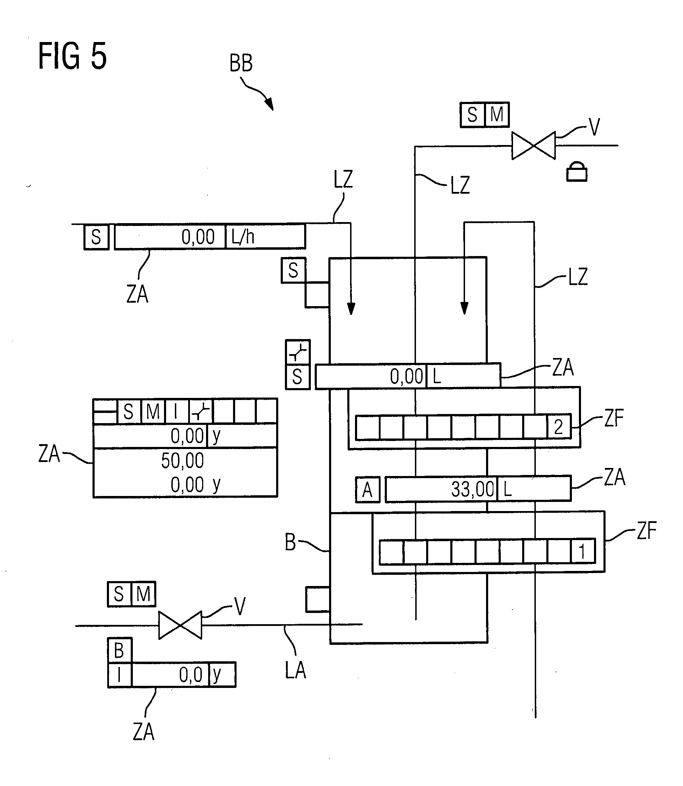

Die FIG 5 zeigt schematisch eine Benutzersicht mit einem erweiterten Bedienbild BB für einen Trainer T. Das erweiterte Bedienbild BB enthält Zusatzfunktionen ZF zur Steuerung der Prozesssimulation PS. Hier sind für den Trainer T zusätzlich zu der Standard-Benutzersicht weitere Eingabe- und/oder Stellmöglichkeiten vorgesehen, um einen Betriebszustand der simulierten Industrieanlage IA, IA' zu beeinflussen oder vorzutäuschen, um Trainingsszenarien TSZ (Betriebssituationen der simulierten Industrieanlage) herbeizuführen. Diese weiteren Eingabe- und/oder Stellmöglichkeiten ZF werden für den Schüler S nicht dargestellt oder können von ihm nicht ausgewählt werden.

Die FIG 6 zeigt schematisch ein Bedienbild BB des Schulungssystems SS für eine Betätigung von Vor-Ort-Bedienelementen VBE. Eine Berücksichtigung von Vor-Ort-Bedienungen ist notwendig, um das Zusammenspiel zwischen Bedienpersonal der Leitwarte LW und übriger Teile der Industrieanlage IA, IA' nachzubilden. In der Industrieanlage IA, IA' gibt es beispielsweise folgende Arten von Vor-Ort-Bedienelementen VBE (hier werden zur Vereinfachung darunter auch Vor-Ort-Anzeigen subsumiert): Handventile, Schlüsselschalter, Not-Aus-Schalter, Sicherungen, Taster, Signallampen, lokale Displays, Schaugläser in Rohrleitungen oder Behältern, akustische Anzeigen.

Folglich ist es zweckmäßig, wenn in dem Schulungssystem SS Trainingsszenarien TSZ vorgesehen sind, die mit Vor-Ort-Bedienelementen VBE zu tun haben. Die mit Leitwartenmitteln erstellte Trainerstation TS kann auch dazu verwendet werden, um Simulationen von Vor-Ort-Bedienelementen VBE durchzuführen.

Die Vor-Ort-Bedienelemente VBE können in der Bildhierarchie der Prozessbedienung in einem getrennten (zusätzlichen) Hierarchieordner dargestellt werden. Die Bildhierarchie kann anhand einer Ortsplanung der Industrieanlage IA, IA' (Standort, Gebäude, Flur, Raum, Bühne, usw.) erstellt werden. Die Bedienbilder BB können mittels Integration von Bildern oder Symbolen SY von Standard-Bedienelementen (beispielsweise für Ventile, Schalter) in Zeichnungen oder Fotos BI von Anlagenteilen erstellt werden.

Ein Beispiel dafür zeigt FIG 6. Zum leichteren Auffinden von Vor-Ort-Bedienelementen VBE ist in die Benutzersicht ein Bild BI einer zu simulierenden Industrieanlage IA, IA' oder eines Teils einer zu simulierenden Industrieanlage IA, IA' eingeblendet, wobei in dem Bild Symbole SY von Vor-Ort-Bedienelementen VBE dort eingezeichnet sind, wo sich die Vor-Ort-Bedienelemente VBE in der Realität befinden. Das Bild BI kann ein Foto der Industrieanlage IA, IA', eine perspektivische Skizze der Industrieanlage IA, IA', eine Seitenansicht der Industrieanlage IA, IA' oder ein Grundriss der Industrieanlage oder von einem Teil derselben sein. Im unteren Teil des Bedienbildes BB sind Symbole SY von Varianten von Vor-Ort-Bedienelementen VBE dargestellt. Zum leichteren Auffinden der Vor-Ort-Bedienelemente VBE der zu simulierenden Industrieanlage IA, IA' ist eine Baumansicht BA für die Orte der Vor-Ort-Bedienelemente VBE eingezeichnet. Wahlweise kann das Bedienbild BB nur dem Trainer T oder auch dem Schüler S angezeigt werden. Unabhängig davon kann dasselbe Bedienbild BB auch einem Anlagenfahrer während eines Inbetriebnehmens, Fahrens oder Außerbetriebnehmens einer Industrieanlage IA, IA' angezeigt werden, die sich in einem Wirkbetrieb (produktiven Betrieb) befindet.

Vorliegend wird ein Schulungssystem SS zum Schulen eines Schülers S zum Fahren einer Industrieanlage IA, IA' bereitgestellt, das einen Prozesssimulator PS, eine erste Steuerung STS zum Überwachen 121 und/oder Steuern 122 eines Simulierens 110 eines Industrieprozesses IP, eine Trainerstation TS mit einer Verwaltungsfunktion VF für Trainingsszenarios TSZ und je eine Bedienoberfläche BT, BS für Trainer T und Schüler S aufweist. Mindestens ein anderer Bestandteil Bbb, Bssz, PS, STS des Schulungssystems SS als die Bedienoberfläche BS für den Schüler S und als die Bedienoberfläche BT für den Trainer T wurde teilweise oder überwiegend mit einem selben Entwicklungswerkzeug wie die Leitwarte LW einer Industrieanlage IA, IA' geschaffen.

## Patentansprüche

1. Schulungssystem (SS) zum Schulen eines Schülers (S) zum Fahren einer Industrieanlage (IA, IA'), wobei das Schulungssystem (SS) umfasst:
- mindestens einen Prozesssimulator (PS) zum Simulieren (110) eines Industrieprozesses (IP),
- mindestens eine erste Steuerung (STS) zum Überwachen (121) und/oder Steuern (122) des Simulierens (110) des Industrieprozesses (IP), das mittels des Prozesssimulators (PS) erfolgt,
- mindestens eine Trainerstation (TS) mit einer Verwaltungsfunktion (VF) für Trainingsszenarios (TSZ) und einer Bedienoberfläche (BT) zum Bedienen der Trainerstation (TS),
- mindestens eine Bedienoberfläche (BS) für den Schüler (S) zum Bedienen (130) der ersten Steuerung (STS),
**dadurch gekennzeichnet, dass**
mindestens ein anderer Bestandteil (Bbb, Bssz, PS, STS) des Schulungssystems (SS) als die Bedienoberfläche (BS) für den Schüler (S) und als die Bedienoberfläche (BT) für den Trainer (T) teilweise oder überwiegend mit einem selben Entwicklungswerkzeug wie die Leitwarte (LW) der Industrieanlage (IA, IA') geschaffen wurde.

2. Schulungssystem (SS) nach dem vorhergehenden Anspruch, **dadurch gekennzeichnet, dass**
- die erste Steuerung (STS) teilweise oder überwiegend mit selben Mitteln verwirklicht ist wie eine zweite Steuerung (STA) zum Überwachen (121) und/oder Steuern (122) der Industrieanlage (IA, IA') und/oder dass
- die Trainerstation (TS) teilweise oder überwiegend mit selben Mitteln verwirklicht ist wie eine Leitwarte (LW) der Industrieanlage (IA, IA') und/oder dass
- die Bedienoberfläche (BS) für den Schüler (S) teilweise oder überwiegend mit selben Mitteln wie eine Leitwarte (LW) der Industrieanlage (IA, IA') verwirklicht ist.

3. Schulungssystem (SS) nach dem vorhergehenden Anspruch, **dadurch gekennzeichnet, dass** das Schulungssystem (SS) dazu vorbereitet ist, teilweise oder überwiegend auf einer teilweise oder überwiegend baugleichen oder sogar identischen Laufzeitumgebung (LU) ausgeführt zu werden wie die Leitwarte (LW) der Industrieanlage (IA, IA').

4. Schulungssystem (SS) nach dem vorhergehenden Anspruch, **dadurch gekennzeichnet, dass** das Schulungssystem (SS) dazu vorbereitet ist, in Zeitteilung mit der Leitwarte (LW) auf einer Laufzeitumgebung (LU) ausgeführt zu werden, auf der Funktionen der Leitwarte (LW) der Industrieanlage (IA, IA') ausführbar sind.

5. Schulungssystem (SS) nach einem der vorhergehenden Ansprüche, **dadurch gekennzeichnet, dass** das Schulungssystem (SS) dazu vorbereitet ist, auf einer anderen Hardware als die Leitwarte (LW) der Industrieanlage (IA, IA'), aber einer ansonsten baugleichen Laufzeitumgebung (LU) wie die Funktionen der Leitwarte (LW) der Industrieanlage (IA, IA') ausgeführt zu werden.

6. Schulungssystem (SS) nach einem der vorhergehenden Ansprüche, **dadurch gekennzeichnet, dass** das Schulungssystem (SS) dazu vorbereitet ist, mindestens ein Feldgerät (FG) der Industrieanlage (IA, IA') zu simulieren.

7. Schulungssystem (SS) nach einem der vorhergehenden Ansprüche, **dadurch gekennzeichnet, dass** das Schulungssystem (SS) eine Bibliothek (Bssz) mit Störszenarien (SSZ) aufweist und die Trainerstation (TS) dazu vorbereitet ist, zum Schulen des Schülers (S) wahlweise eines oder mehrere der Störszenarien (SSZ) zu aktivieren.

8. Schulungssystem (SS) nach einem der vorhergehenden Ansprüche, **dadurch gekennzeichnet, dass** das Schulungssystem (SS) eine Bibliothek (Bbb) mit mindestens einem Bedienbild (BB) aufweist, das anzeigt, welche manuellen Bedienelemente zum Bedienen einer Anlagenkomponente (AK) der Industrieanlage (IA, IA') vorgesehen sind.

9. Industrielles System (IS), das ein Schulungssystem (SS) nach einem der Ansprüche 1 bis 8 und eine Industrieanlage (IA, IA') zum Ausführen eines Industrieprozesses (IP) aufweist, wobei die Industrieanlage (IA, IA') eine zweite Steuerung (STA) zum Überwachen (121) und/oder Steuern (122) der Industrieanlage (IA, IA') und eine Leitwarte (LW) aufweist.

10. Verfahren (100) zum Schulen eines Schülers (S) zum Fahren einer Industrieanlage (IA, IA') umfassend:
- Simulieren (110) mindestens eines Industrieprozesses (IP),
- Überwachen (121) und/oder Steuern (122) des Simulierens (110) des Industrieprozesses (IP),
- erstes Betreiben (130) mindestens einer Trainerstation (TS), die eine Verwaltungsfunktion (VF) für Trainingsszenarios (TSZ) und eine Bedienoberfläche (BT) zum Bedienen der Trainerstation (TS) aufweist,
- zweites Betreiben (140) mindestens einer Bedienoberfläche (BS) für den Schüler (S) zum Überwachen (121) und/oder Steuern (122) des Simulierens (110) des Industrieprozesses (IP),
**dadurch gekennzeichnet, dass**
mindestens ein anderer Bestandteil (Bbb, Bssz, PS, STS) des Schulungssystems (TS) als die Bedienoberfläche (BS) für den Schüler (S) und als die Bedienoberfläche (BT) für den Trainer (T) teilweise oder überwiegend mit einem selben Entwicklungswerkzeug wie eine Leitwarte (LW) der Industrieanlage (IA, IA') geschaffen wurde.
